# EUROPÄISCHE PATENTSCHRIFT

(11) **EP 0 712 446 B1**
(45) Veröffentlichungstag und Bekanntmachung des Hinweises auf die Patenterteilung: **07.05.1997**
(21) Anmeldenummer: 94924267.1
(22) Anmeldetag: 20.07.1994
(51) Int. Cl.: C22B 7/02, C22B 1/245

(54) **VERFAHREN ZUM HERSTELLEN VON STAHL UNTER EINSATZ VON BRIKETTS AUS HÜTTENRESTSTOFFEN**
PROCESS FOR PRODUCING STEEL USING BRIQUETTES FROM SMELTING RESIDUES
PROCEDE DE PRODUCTION D'ACIER UTILISANT DES BRIQUETTES A PARTIR DE RESIDUS DE FONDERIE

(30) Priorität: 20.07.1993 DE 4324343
(43) Veröffentlichungstag der Anmeldung: 22.05.1996
(73) Patentinhaber: Maschinenfabrik Köppern GmbH. & Co. KG, 45506 Hattingen (DE)
(72) Erfinder: GRANDIN, Friedrich-Hans, D-40885 Ratingen (DE); PFAFF, Walter, D-35619 Braunfels (DE)
(74) Vertreter: Grünecker, Kinkeldey, Stockmair & Schwanhäusser Anwaltssozietät
(86) Internationale Anmeldenummer: EP9402393
(87) Internationale Veröffentlichungsnummer: WO9503433

(56) Entgegenhaltungen:
- EP-A- 0 499 779
- DE-A- 3 307 175
- DE-C- 1 138 229
- US-A- 2 865 731
- US-A- 4 765 829
- US-A- 5 100 464

## Beschreibung

Die Erfindung bezieht sich auf ein Verfahren zum Herstellen von Briketts für den Einsatz bei der Stahlerzeugung in einem Schmelzgefäß, bei dem eisenoxidhaltige Hüttenreststoffe brikettiert werden.

In Hüttenwerken fallen verschiedene eisenoxidhaltige Reststoffe, wie z.B. Filterstäube aus Stahlwerken und Hochöfen, Walzzunder aus Walzwerken und Schlämme aus Gasreinigungen an. Diese Reststoffe wurden früher auf Deponien endgelagert oder durch Aufgabe auf Sinteranlagen in den Hochofenprozeß rückgeführt. Wegen des wachsenden Kostendrucks und der in Zukunft zu erwartenden Grenzwerte für Umweltbelastungen ist man seit einiger Zeit bestrebt, die Reststoffe in den Stahlerzeugungsprozeß zurückzuführen. Bekannt sind Verfahren, bei denen Reststoffe, insbesondere Filterstäube aus LD-Stahlwerken einerseits, heißbrikettiert im Konverter eingesetzt oder andererseits im Konverter eingeblasen werden. Der Nachteil dieser Verfahren besteht darin, daß nur ein einziger eisenoxidhaltiger Reststoff verwertet werden kann. Zum anderen können Eisenoxide nur in begrenztem Maße dem Konverter zugeführt werden und dienen somit ausschließlich als Kühlerzersatz. Das Zuführen der eisenoxidhaltigen Reststoffbriketts erfolgt also im wesentlichen nur zur Temperaturregulierung. Die eingebrachte Menge an eisenoxidhaltigen Reststoffen übersteigt dabei selten 5 Gew.-%.

Es ist aus der US-A-2865731 schon bekannt, eisenoxidhaltige Reststoffe unter Zusatz von Zellulosefasern als Bindemittel zu brikettieren und in den Hochofen zur Eisenerzeugung einzubringen, wobei das Bindemittel verbrannt und die reduzierende Atmosphäre im Hochofen unterstützt. Jedoch eignen sich die dort verwendeten Briketts nicht zum Einsatz als Schrottersatz bei der Stahlerzeugung in einem Schmelzgefäß, was im Gegensatz zu der vorliegenden Erfindung steht. Zudem werden in dieser bekannten Druckschrift hauptsächlich die Vorteile der Zellulosefasern als Bindemittel gewürdigt, was in eine gänzlich andere Richtung zielt als die Lösung der der vorliegenden Erfindung zugrundliegenden Aufgabe, den bei den im Hochofen vorhandenen Drücken ist die Formbeständigkleit der Eisenoxidbriketts von besonderer Bedeutung. Das Mischungsverhältnis von Bindemitteln und Eisenoxiden wird bei den bekannten Briketts nach der gewünschten Festigkeit festgelegt.

Desweiteren ist aus der DE-AS 11 89 573 ein Verfahren zum Herstellen von Briketts aus z.B. Hochofen- oder Konvertstaub entnehmbar, bei dem vor dem Brikettieren Reduktiomittel in Form von Kohle oder Koks, sowie Zuschläge zugemischt werden, nach dem die Ausgangsprodukte vorab jeweils einer progesiven Zerkleinerung mit gesteuerten Rücklauf unterzogen wurden. Die so hergestellten Briketts werden dann im Hochofen eingeschmolzen. Eine Einbringung von stark oxidartigen Material in einen Stahlerzeugungsprozeß wird nicht beschrieben.

Aus der DE-AS 11 38 229 und der DE-PS 33 07 175 sind ebenfalls Verfahren zur herstellung von Agglomeraten bestehend aus Feinerzen und Reduktionsmitteln zum Einbringen in einem Hochofen bekannt.

Aus eisenoxidhaltigen Hüttenreststoffen und einer für eine vollständige Reduktion derselben ausreichenden Menge zugenischter Kohlenstoffträger hergestellte Briketts und der Einsatz der Briketts in der Stahlherstellung sind beschrieben in US-A-4 765 829.

Die Aufgabe der vorliegenden Erfindung besteht darin, ein Verfahren zum Herstellen von Briketts bereitzustellen, die eine bessere Verwertung von eisenoxidhaltigen Reststoffen bei der Herstellung von Stahl in einem Schmelzgefäß gewähren.

Diese Aufgabe wird erfindungsgemäß durch die Merkmale von Anspruch 1 gelöst. Den Reststoffen werden vor dem Brikettieren Kohlenstoffträger im wesentlichen gleichmäßig verteilt zugeführt, wie zu einer im wesentlichen vollständigen, autothermen Reduktion der eisenoxidhaltigen Reststoffe nötig, so daß die Briketts als Schrottersatz in einer den Schrott mindestens großteils ersetzenden Menge im Konverter einsetzbar sind. In unmittelbarer Nähe der Eisenoxide in den Reststoffen befinden sich nun Kohlenstoffträger, die die in den Reststoffen enthaltenen Eisenoxide reduzieren können. Des weiteren wird die Energiebilanz im wesentlichen optimiert und eine vollständige Reduktion der Eisenoxide in den Reststoffen gewährleistet. An sich erscheint das zusätzliche Zusetzen von Kohlenstoffträgern in den Konverter eher unsinnig, da man insbesondere beim Stahlgewinnungsprozeß bestrebt ist, den Kohlenstoffgehalt in der Schmelze zu senken. Da aber die in den Reststoffen enthaltenen Eisenoxide mit den Kohlenstoffträgern in den Reststoffbriketts reagieren können, ergeben sich erhebliche Vorteile. Bei dem erfindungsgemäßen Verfahren kann eine Mischung aus verschiedenen Hüttenreststoffen,wie z.B. Filterstäube aus Stahlwerken und Hochöfen, Walzzunder aus Walzwerken und getrocknete Schlämme aus Naßgaswäschen eingesetzt werden. Das Mischungsverhältnis kann gemäß den jeweiligen Anfallverhältnissen gewählt werden. Weiterhin ist ein Konverter nunmehr in der Lage, größere Mengen an eisenoxidhaltigen Reststoffen aufzunehmen, so daß bis zu 30 % dieser Reststoffe dem Konverter zugeführt werden können. Die Reststoffe können daher nicht nur als Kühlerzersatz wie in den bekannten Verfahren, verwendet werden, sondern sogar anstelle von Schrott in den Konverter eingesetzt werden. Hierdurch ergeben sich erhebliche wirtschaftliche Vorteile sowie eine gute Rückführbarkeit in Hütten anfallender Reststoffe bei Stahlerzeugungsverfahren.

Eine weitere Variante des erfindungsgemäßen Verfahrens sieht vor, daß die Reststoffe und die Kohlenstoffträger kaltbrikettiert werden können. Hierdurch müssen die Reststoffe nicht unmittelbar nach der Entstehung oder nach nochmaligem Aufheizen brikettiert werden, wodurch beträchtliche Energiemengen eingespart werden können.

Weiterhin wird für ein Reststoffbrikett zum Verwenden in dem erfindungsgemäßen Verfahren Schutz begehrt. Das Reststoffbrikett ist gekennzeichnet durch eine Zusammensetzung aus 50-70 % eisenoxidhaltigen Reststoffen und 15-25 % Kohlenstoffträgern. Das exakte Mischungsverhältnis kann dann jeweils gemäß der Zusammensetzung der eisenoxidhaltigen Reststoffmischung bestimmt werden. Somit ist jeweils eine optimale Reduktion der Eisenoxide in den Reststoffen gewährleistet.

Bevorzugt werden in dem Reststoffbrikett als Reststoffe Walzzunder und/oder Filterstäube aus Stahlwerken und Hochöfen und/oder getrocknete Filterschlämme aus der Naßgaswäsche verwendet. Diese Reststoffe sind jene Reststoffe, die üblicherweise in einem Hüttenwerk bei anderen Erzeugungsverfahren zwangsläufig entstehen und entsorgt werden müssen. Diese Reststoffe bleiben durch Verwenden in dem Reststoffbrikett dem Hüttenkreislauf erhalten.

Bevorzugt können die Kohlenstoffträger im Reststoffbrikett aus Petrolkoks und/oder Feinkoks bestehen. Diese Stoffe sind bereits im Hüttenkreislauf vorhanden, wodurch das Reststoffbrikett ohne weiteres in einem Hüttenwerk hergestellt werden kann.

In günstiger Weise kann das Reststoffbrikett ein im wesentlichen gleichmäßig verteilt zugemischtes Bindemittel enthalten. Dadurch wird das Reststoffbrikett formstabiler, wodurch keine sofortige Auflösung in der Roheisenschmelze erfolgt.

Bevorzugt kann dabei das Bindemittel aus Kalkhydrat und/oder Sulfitablange und/oder Melasse bestehen. Dabei weist Kalkhydrat einen Anteil von 1-4 % und Melasse einen Anteil von 2-7 % und Sulfitablange einen Anteil von 1-4 %, bezogen auf das Reststoffbrikett, auf. Diese Zusammensetzung hat sich bereits in der Hüttentechnik als Bindemittel bewährt.

Des weiteren kann das Bindemittel auch aus Papiermehl bestehen, wobei das Papiermehl einen Anteil von 1-4 %, bezogen auf das Reststoffbrikett, aufweist. Das Papiermehl hat sich ebenfalls als Bindemittel bewährt.

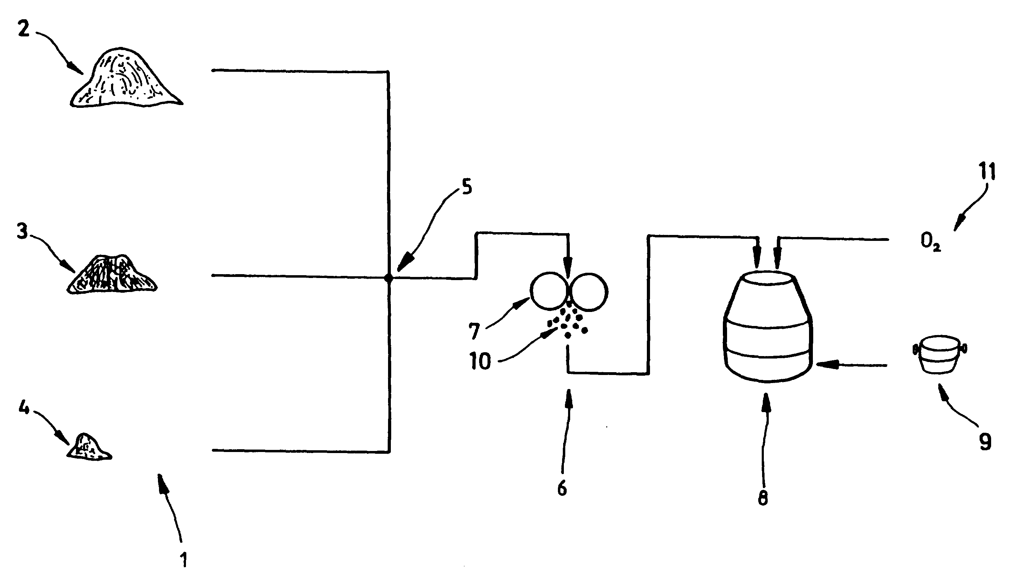

Im folgenden wird eine Ausführungsform der vorliegenden Erfindung anhand einer Zeichnung näher erläutert. Die einzige Figur zeigt einen schematischen Ablaufplan des erfindungsgemäßen Verfahrens.

Wie aus der Zeichnung zu erkennen ist, werden bei dem erfindungsgemäßen Verfahren im wesentlichen drei Brikettausgangsstoffe 2 verwendet, die im wesentlichen in einem Hüttenwerk anfallen. Als Reststoffe 2 werden insbesondere Walzzunder, Filterstäube aus Stahlwerken und Hochöfen, sowie getrocknete Schlämme aus der Naßgaswäsche, verwendet.

Weiterhin werden als Brikettausgangsstoffe 1 Kohlenstoffträger 3 verwendet, die ebenfalls in den meisten Hüttenwerken bereits für andere Erzeugungsverfahren, insbesondere in Form von Petrolkoks und Feinkoks, vorhanden sind.

Zusätzlich wird als letzter Brikettausgangsstoff 1 noch ein Bindemittel 4 verwendet, das bevorzugt aus Kalkhydrat und/oder Melasse besteht. Bewährt hat sich auch ein Bindemittel aus Papiermehl.

Die Brikettausgangsstoffe 1, die bevorzugt in feinteiliger Form vorliegen, werden anschließend in einem Mischvorgang 5 zusammengeführt. Dabei beträgt der Anteil an eisenoxidhaltigen Reststoffen 2 etwa 50-70 %, der Anteil an Kohlenstoffträgern 3 etwa 15-25 %, und je nach Art und Verwendung des Bindemittels 4 der Anteil an Kalkhydrat 1-4 %, der Anteil an Melasse 4-7% und der Anteil an Papiermehl 2-4 %.

Nachdem die Brikettausgangsstoffe 1 im wesentlichen gleichmäßig miteinander vermischt sind, werden sie einer Brikettpresse zur Durchführung eines Brikettiervorgangs 6 zugeführt. Für den Brikettiervorgang 6 werden bevorzugt Walzenbrikettieranlagen 7 eingesetzt. Der Brikettiervorgang 6 erfolgt vorzugsweise in kaltem Zustand.

Zwischenzeitlich oder anschließend wird einem Konverter 8 Roheinsenschmelze 9 zugeführt. Der Roheisenschmelze 9 werden dann die vorab erzeugten Reststoffbriketts 10 durch Einfüllen in den Konverter 8 zugeführt. Anschließend erfolgt der Frischvorgang im Konverter 8 durch Einblasen von Sauerstoff 11.

Durch die unmittelbare Nähe der Kohlenstoffträger 3 zu den eisenoxidhaltigen Reststoffen 2 erfolgt nunmehr eine Reduktion der Eisenoxide, die zur Folge hat, daß sich das so entstehende Eisen mit der restlichen Roheisenschmelze vermischt. Der Sauerstoff der Einsenoxidverbindungen wird durch den in den Kohlenstoffträgern 3 enthaltenen Kohlenstoff chemisch als Kohlenmonoxid und/oder Kohlendioxid gebunden und aus dem Konverter 8 abgeführt. Die unmittelbare Nähe der einsenoxidhaltigen Reststoffe zu den Kohlenstoffträgern 3 bewirkt, daß der zusätzlich eingeblasene Sauerstoff 1 hauptsächlich als Wärmelieferant durch Reaktion mit der Roheisenschmelze und nicht zur Oxidation der Kohlenstoffträger 3 dient.

Das erfindungsgemäße Verfahren macht es somit möglich, daß Reststoffbriketts 10 in einem Anteil von bis zu 30 % im Konverter 8 der Roheisenschmelze 9 zugeführt werden können.bei dem Elektrooffen 8 können die Anteile der Reststoffbriketts 10 deutlich höher liegen. Die Reststoffbriketts 10 können daher anstelle von Schrott eingesetzt werden.
Dies ist besonders dann der Fall, wenn den Reststoffbriketts 10 eben so viele Kohlenstoffträger 3 zugemischt werden, daß durch diese eine vollständige Reduktion der Eisenoxide in den Reststoffbriketts 10 erfolgt. Das erfindungsgemäße Verfahren weist somit den Vorteil auf, daß Hüttenreststoffe in großem Maße, soweit die Reststoffbriketts 10 im Hüttenwerk erzeugt werden, sofort an Ort und Stelle wiederverwertet werden können.

Das erfindungsgemäße Verfahren leistet somit einen entscheidenden Beitrag zur Lösung der Umweltproblematik und Rohstoffknappheit.

## Patentansprüche

1. Verfahren zum Herstellen von Stahl in einem Schmelzgefäß, dem Kohlenstoffträger enthaltende Briketts aus eisenoxidhaltigen Hüttenreststoffen als Schrottersatz in einer den Schrott mindestens großteils ersetzenden Menge zugeführt werden, wobei die Kohlenstoffträger im wesentlichen gleichmäßig verteilt in den Briketts angeordnet sind und gerade soviele Kohlenstoffträger zugeführt sind, wie zu einer im wesentlichen vollständigen Reduktion der eisenoxidhaltigen Reststoffe im Schmelzgefäß benötigt werden.

2. Verfahren nach Anspruch 1, **dadurch gekennzeichnet**, daß kaltbrikettierte Briketts verwendet werden.

3. Verfahren nach Anspruch 1 oder 2, **dadurch gekennzeichnet**, daß die Briketts mit einer Zusammensetzung von 50-70% eisenoxidhaltigen Reststoffen (2) und 15-25% Kohlenstoffträgern (3) hergestellt werden.

4. Verfahren nach Anspruch 3, **dadurch gekennzeichnet**, daß als Reststoffe (2) Walzzunder aus Walzwerken und Stranggießanlagen und/oder Filterstäuben aus Stahlwerken und Hochöfen und/oder getrocknete Filterschlämmen aus der Naßgaswäsche verwendet werden.

5. Verfahren nach Anspruch 3 oder 4, **dadurch gekennzeichnet**, daß als Kohlenstoffträger (3) Petrolkoks und/oder Feinkoks auf der Basis Steinkohle und/oder Braunkohle und/oder Gichtstaub verwendet werden.

6. Verfahren nach einem der Ansprüche 3 bis 5, **dadurch gekennzeichnet**, daß den Briketts ein im wesentlichen gleichmäßig verteiltes Bindemittel (4) zugemischt wird.

7. Verfahren nach Anspruch 6, **dadurch gekennzeichnet**, daß als Bindemittel (4) Kalkhydrat und/oder Sulfitablauge und/oder Melasse verwendet wird oder werden, wobei Kalkhydrat einen Anteil von 1-4%, Melasse einen Anteil von 2-7% und Sulfitablauge einen Anteil von 1-4%, bezogen auf das Reststoffbrikett (10), aufweist.

8. Verfahren nach Anspruch 6 oder 7, **dadurch gekennzeichnet**, daß als Bindemittel (4) Papiermehl verwendet wird, wobei das Papiermehl einen Anteil von 1-4%, bezogen auf das Reststoffbrikett (10), aufweist.

## Claims

1. A method of making steel in a melting vessel having supplied thereto briquettes, which consist of iron oxide-containing metallurgical residues and which contain carbon carriers, as a scrap substitute in an amount replacing the scrap at least to a large extent, wherein the carbon carriers are arranged in the briquettes in an essentially uniformly distributed form and the amount of carbon carriers added corresponds precisely to the amount required for causing an essentially complete reduction of the iron-oxide containing residues in the melting vessel.

2. A method according to claim 1, **characterized in that** cold-briquetted briquettes are used.

3. A method according to claim 1 or 2, **characterized in that** the briquettes are produced with a composition of 50-70 % iron oxide-containing residues (2) and 15-25 % carbon carriers (3).

4. A method according to claim 3, **characterized in that** the residues (2) consist of rolling scale from rolling mills and continuous casting plants and/or filter dusts from steel plants and blast furnaces and/or dried filter slurries from wet gas cleaning.

5. A method according to claim 3 or 4, **characterized in that** petroleum coke and/or culm coke on a basis of hard coal and/or brown coal and/or flue dust are used as carbon carriers (3).

6. A method according to one of the claims 3 to 5, **characterized in that** the briquettes have admixed thereto a binder (4) in an essentially uniformly distributed form.

7. A method according to claim 6, **characterized in that** hydrated lime and/or sulphite lye and/or molasses is or are used as a binder (4), hydrated lime being contained in an amount of 1-4 %, molasses in an amount of 2-7 %, and sulphite lye in an amount of 1-4 % based upon the residue briquette (10).

8. A method according to claim 6 or 7, **characterized in that** ground paper is used as a binder (4), said ground paper being contained in an amount of 1-4 % based upon the residue briquette (10).

## Revendications

1. Procédé de fabrication d'acier dans un creuset, auquel sont amenés, pour remplacer la ferraille et en une quantité remplaçant, du moins en grande partie, la ferraille, des agglomérés, renfermant des constituants porteurs de carbone provenant de résidus de fonderie contenant de l'oxyde de fer, les constituants porteurs de carbone étant répartis sensiblement régulièrement dans les agglomérés et les constituants porteurs de carbone étant amenés exactement selon la quantité nécessaire à une réduction sensiblement complète, dans le creuset, des résidus contenant de l'oxyde de fer.

2. Procédé selon la revendication 1, caractérisé en ce que l'on utilise des agglomérés obtenus par agglomération à froid.

3. Procédé selon la revendication 1 ou 2, caractérisé en ce que les agglomérés sont fabriqués avec une composition de 50 à 70 % de résidus contenant de l'oxyde de fer (2) et de 15 à 25 % de constituants porteurs de carbone (3).

4. Procédé selon la revendication 3, caractérisé en ce que l'on utilise, en tant que résidus (2), des battitures provenant de laminoirs et d'installations de coulée continue et/ou des poussières de filtration provenant d'aciéries et de hauts fourneaux et/ou des boues de filtration séchées provenant d'installations d'épuration de gaz par voie humide.

5. Procédé selon la revendication 3 ou 4, caractérisé en ce que l'on utilise, en tant que constituants porteurs de carbone (3), du coke de pétrole et/ou du coke granulé à base de houille et/ou de lignite et/ou de poussières de gueulard.

6. Procédé selon l'une des revendications 3 à 5, caractérisé en ce qu'un liant (4), réparti sensiblement régulièrement, est ajouté à l'aggloméré.

7. Procédé selon la revendication 6, caractérisé en ce que l'on utilise, en tant que liant (4), de la chaux hydratée et/ou de la lessive de sulfite résiduelle et/ou de la mélasse, la chaux hydratée représentant une proportion de 1 à 4 %, la mélasse une proportion de 2 à 7 % et la lessive de *sulfite* résiduelle une proportion de 1 à 4 %, par rapport à l'aggloméré de résidus (10)

8. Procédé selon la revendication 6 ou 7, caractérisé en ce que l'on utilise, en tant que liant (4), de la farine de papier, la farine de papier représentant une proportion de 1 à 4 %, par rapport à l'aggloméré de résidus (10).
